# EUROPEAN PATENT APPLICATION

(11) **EP 4 195 743 A1**
(43) Date of publication of application: **14.06.2023**
(21) Application number: 20947913.8
(22) Date of filing: 05.08.2020
(51) Int. Cl.: H04W 24/02, H04W 8/22

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Taor, Simon Edward William
(86) International application number: PCT/CN2020/107181
(87) International publication number: WO 2022/027345

(57) **Abstract**

Provided are a wireless communication method and device. The method includes: receiving a first request message, wherein the first request message is used for requesting, from a terminal device, a first data analysis corresponding to a first data analysis identifier; and sending an analysis result of the first data analysis. By making full use of abundant data resources on a terminal device side, not only can data sharing on the terminal device side be realized, but also the accuracy of an analysis result can be improved, and the problem of a privacy leak caused by the sharing of original data of the terminal device can be prevented. Moreover, the computation capacity, the storage capacity and the battery capacity of the terminal device are improved, such that the terminal device can also locally perform intelligent data analysis, thus a working load of a core network device (e.g. an NWDAF) can be reduced, and the processing efficiency of the core network device can be improved.

## Description

### TECHNICAL FIELD

Embodiments of this application relate to the field of communications, and more specifically, to a wireless communication method and device.

### BACKGROUND

The 5th Generation (5G) mobile communication technology adds a Network Data Analytics Function (NWDAF) in a core network; data may be collected from network elements of the core network, network management systems and the like for big data statistics, analysis or intelligent data analysis, so as to obtain analysis or prediction data of a network side. Therefore, the network elements are assisted to more effectively control access of a terminal device according to data analysis results.

However, due to the sensitivity of the data on the terminal device side, problems such as data privacy need to be taken into consideration. NWDAF does not take the possibility of big data analysis and intelligent data analysis by terminal devices into consideration during data analysis, and only relies on the data collected from the network side for analysis and prediction of network conditions and terminal device behaviors. Since the data for analysis is insufficient, the accuracy of analysis results is relatively low accordingly.

### SUMMARY

Provided are a wireless communication method and device. Therefore, not only can data sharing on a terminal device side be realized, but also the problem of a privacy leak caused by the sharing of original data of the terminal device can be prevented.

A first aspect provides a wireless communication method. The method includes the following operations.

A first request message is received. The first request message is used for requesting, from a terminal device, a first data analysis corresponding to a first data analysis identifier.

An analysis result of the first data analysis is sent.

A second aspect provides a wireless communication method. The method includes the following operations.

A first request message is sent. The first request message is used for requesting, from a terminal device, a first data analysis corresponding to a first data analysis identifier.

An analysis result of the first data analysis is received.

A third aspect provides a wireless communication method. The method includes the following operations.

A first data analysis identifier and information of a terminal device are determined.

A response message is sent to a request device, or a first request message is sent to the terminal device based on the information of the terminal device. The response message includes the first data analysis identifier or the information of the terminal device. The first request message is used for requesting, from the terminal device, a first data analysis corresponding to the first data analysis identifier.

A fourth aspect provides a terminal device. The terminal device is configured to execute the method in the first aspect or each implementation thereof. Specifically, the terminal device includes a functional module that is configured to execute the method in the first aspect or each implementation thereof.

A fifth aspect provides a request device. The request device is configured to execute the method in the second aspect or each implementation thereof. Specifically, the network device includes a functional module that is configured to execute the method in the second aspect or each implementation thereof.

A sixth aspect provides a management device. The management device is configured to execute the method in the third aspect or each implementation thereof. Specifically, the network device includes a functional module that is configured to execute the method in the third aspect or each implementation thereof.

A seventh aspect provides a terminal device, including a processor and a memory. The memory is configured to store a computer program. The processor is configured to call and run the computer program stored in the memory, so as to execute the method in the first aspect or each implementation thereof.

An eighth aspect provides a request device, including a processor and a memory. The memory is configured to store a computer program. The processor is configured to call and run the computer program stored in the memory, so as to execute the method in the second aspect or each implementation thereof.

A ninth aspect provides a management device, including a processor and a memory. The memory is configured to store a computer program. The processor is configured to call and run the computer program stored in the memory, so as to execute the method in the third aspect or each implementation thereof.

A tenth aspect provides a chip. The chip is configured to implement the method in any one of the first aspect to the third aspect or each implementation thereof. Specifically, the chip includes: a processor, configured to call and run a computer program from a memory, to cause a device having the chip mounted to execute the method in any one of the first aspect to the third aspect or each implementation thereof.

An eleventh aspect provides a computer-readable storage medium. The computer-readable storage medium is configured to store a computer program. The computer program causes a computer to execute the method in any one of the first aspect to the third aspect or each implementation thereof.

A twelfth aspect provides a computer program product. The computer program product includes a computer program instruction. The computer program instruction causes a computer to execute the method in any one of the first aspect to the third aspect or each implementation thereof.

A thirteenth aspect provides a computer program. When the computer program is run on a computer, the computer executes the method in any one of the first aspect to the third aspect or each implementation thereof.

On the basis of the above technical solutions, by means of the first request message, the analysis result of the first data analysis corresponding to the first data analysis identifier can be directly requested from the terminal device. That is to say, the terminal device can provide, to an opposite-end device, the analysis result of the first data analysis that is obtained through big data statistics, analysis or intelligent data analysis locally performed by the terminal device. By making full use of abundant data resources on a terminal device side, not only can data sharing on the terminal device side be realized, but also the accuracy of an analysis result can be improved, and the problem of a privacy leak caused by the sharing of original data of the terminal device can be prevented. Moreover, the computation capacity, the storage capacity and the battery capacity of the terminal device are improved, such that the terminal device can also locally perform intelligent data analysis, thus a working load of a core network device (for example, an NWDAF) can be reduced, and the processing efficiency of the core network device can be improved.

### BRIEF DESCRIPTION OF THE DRAWINGS

FIG. 1 is an example of an applicable communication system according to an embodiment of this application.
FIG. 2 to FIG. 7 are schematic flowcharts of a wireless communication method according to an embodiment of this application.
FIG. 8 is a schematic block diagram of a terminal device according to an embodiment of this application.
FIG. 9 is a schematic block diagram of a request device according to an embodiment of this application.
FIG. 10 is a schematic block diagram of a management device according to an embodiment of this application.
FIG. 11 is a schematic block diagram of a communication device according to an embodiment of this application.
FIG. 12 is a schematic block diagram of a chip according to an embodiment of this application.

### DETAILED DESCRIPTION

The technical solutions in the embodiments of this application will be described below with reference to the drawings in the embodiments of this application. It is apparent that the described embodiments are only part of the embodiments of this application, not all the embodiments. All other embodiments obtained by those of ordinary skill in the art on the basis of the embodiments in the present application without creative work all fall within the scope of protection of the present application.

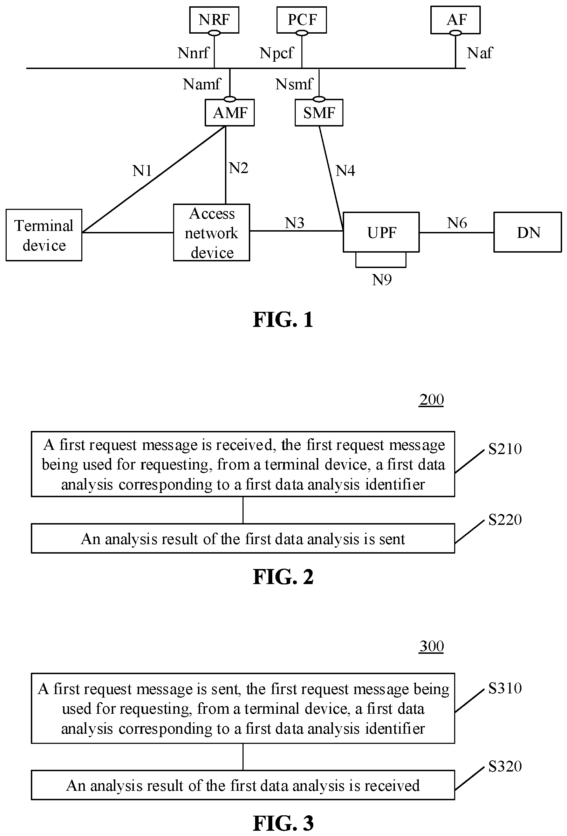

FIG. 1 is an example of an applicable communication system 100 according to an embodiment of this application.

As shown in FIG. 1, the communication system 100 may be a system architecture diagram of a terminal device accessing a mobile network. The communication system 100 may include: a terminal device, an access network device, an Access and Mobility Management Function (AMF), a Network Repository Function (NRF), a Session Management Function (SMF), a User Plane Function (UPF), a Policy Control Function (PCF), an Application Function (AF), and a Data Network (DN).

The terminal device is in Access Stratum (AS) connection with the access network device, so as to interact with an AS message and wireless data transmission. The terminal device is in Non Access Stratum (NAS) connection with the AMF, so as to interact with an NAS message. The AMF is responsible for the mobility management of the terminal device. The SMF is responsible for the session management of the terminal device. The AMF, in addition to performing mobility management on a mobile terminal, may be used to be responsible for forwarding session management related messages between the terminal device and the SMF. The PCF may be used to be responsible for formulating policies related to mobility management, session management, billing, and the like for the terminal device. The UPF is connected to the access network device and the DN for data transmission.

As shown in FIG. 1, the various nodes or network elements in the communication system may be connected to each other by means of various types of interfaces for communication.

For example, the terminal device may be connected to the AMF by means of an N1 interface; the AMF may be connected to the NRF by means of an Namf interface and an Nnrf interface; the access network device may be connected to the AMF by means of an N2 interface, and may also be connected to the UPF by means of an N3 interface; the UPF may be connected to the SMF by means of an N4 interface, may also be connected to the DN by means of an N6 interface, and may also be internally connected by means of an N9 interface; and the SMF may be connected to the PCF by means of an Nsmf interface and an Npcf interface, and may also be connected to the AF by means of an Naf interface.

It should be understood that, the above types of interfaces are examples only, and can be specifically functional interfaces that are defined or specified in a communication standard.

It should also be understood that, the embodiments of this application only use the communication system 100 for exemplary description, but the embodiments of this application are not limited thereto. That is to say, the technical solution of the embodiments of this application is applicable to various communication systems, such as a Long Term Evolution (LTE) system, an LTE Time Division Duplex (TDD) system, a Universal Mobile Telecommunication System (UMTS), 5G communication system (also called a New Radio (NR)communication system), or a future communication system.

In the communication system 100 shown in FIG. 1, the access network device may be an access network device communicating with the terminal device. The access network device may provide communication coverage for a specific geographical region, and may communicate with the terminal device (for example, User Equipment (UE)) located in the coverage region.

The access network device may be an Evolutional Node B (eNB or eNodeB) in the LTE system, or a Next Generation Radio Access Network (NG RAN) device, or a base station (gNB) in the NR system, or a wireless controller in a Cloud Radio Access Network (CRAN). Alternatively, the access network device may be a relay station, an access point, a vehicle device, a wearable device, a hub, a switch, a network bridge, a router, a network device in a future evolved Public Land Mobile Network (PLMN), or the like.

The terminal device may be any terminal device, which includes, but is not limited to, a terminal device that is in wired or wireless connection with a network device or other terminal device.

For example, the terminal device may be an access terminal, UE, a user unit, a user station, a mobile station, a mobile platform, a remote station, a remote terminal, a mobile device, a user terminal, a terminal, a wireless communication device, a user agent, or a user device. The access terminal may be a cellular phone, a cordless phone, a Session Initiation Protocol (SIP) phone, a Wireless Local Loop (WLL) station, a Personal Digital Assistant (PDA), a handheld device having a wireless communication function, a computing device or another processing device of a wireless modem, a vehicle device, a wearable device, a terminal device in a 5G network, or a terminal device in a future evolved network.

The terminal device may be used for the communication of Device to Device (D2D).

FIG. 1 exemplarily shows a terminal device and an access network device. Optionally, the wireless communication system 100 may include a plurality of access network devices, and the coverage of each access network device may include other numbers of terminal devices. The embodiments of this application are not limited thereto.

It is to be understood that, a device having a communication function in a network/system in the embodiments of this application may be called as a communication device. By using the communication system 100 shown in FIG. 1 as an example, the communication device may include a network device 120 having a communication function and a terminal device 110. The network device 120 and the terminal device 110 may be devices described above, which are not described herein again. The communication device may further include other devices in the communication system 100, such as other network entities such as a network controller and a mobile management entity. The embodiments of this application are not limited thereto.

It is to be understood that, terms "system" and "network" in the disclosure may usually be exchanged in the disclosure. The term "and/or" in the disclosure is merely an association relationship describing related objects, which means that there may be three relationships, for example, A and/or B may indicate three cases: A exists alone, A and B exist simultaneously, and B exists alone. In addition, the character "/" in this paper generally indicates that the related objects are in an "or" relationship.

FIG. 2 is a schematic flowchart of a wireless communication method 200 according to an embodiment of this application. The method 200 may be executed by the terminal device. The terminal device shown in FIG. 2 may be the terminal device shown in FIG. 1.

As shown in FIG. 2, the method 200 may include the following steps.

At S210, a first request message is received. The first request message is used for requesting, from a terminal device, a first data analysis corresponding to a first data analysis identifier.

At S220, an analysis result of the first data analysis is sent.

In brief, after receiving the first request message, the terminal device sends the analysis result of the first data analysis.

For example, the terminal device determines the type of the first data analysis based on the first request message. Therefore, data analysis may be performed on the type of the first data analysis, so as to acquire the analysis result of the first data analysis.

By means of the first request message, the analysis result of the first data analysis corresponding to the first data analysis identifier can be directly requested from the terminal device. That is to say, the terminal device can provide, to an opposite-end device, the analysis result of the first data analysis that is obtained through big data statistics, analysis or intelligent data analysis locally performed by the terminal device. By making full use of abundant data resources on a terminal device side, not only can data sharing on the terminal device side be realized, but also, the accuracy of an analysis result can be improved, and the problem of a privacy leak caused by the sharing of original data of the terminal device can be prevented. Moreover, the computation capacity, the storage capacity and the battery capacity of the terminal device are improved, such that the terminal device can also locally perform intelligent data analysis, thus a working load of a core network device (for example, an NWDAF) can be reduced, and the processing efficiency of the core network device can be improved.

It is to be noted, in this application, different data analysis identifiers may correspond to different data analyses. Definitely, different data analyses may correspond to the same data analysis identifier, or the same data analysis may correspond to different data analysis identifiers, and this application is not specifically limited thereto.

In some embodiments of this application, the first data analysis is a statistical or predictable analysis that is supported by the terminal device.

In some embodiments of this application, the first data analysis includes at least one of: mobility analysis of the terminal device, communication characteristics analysis of the terminal device, performance analysis of the terminal device, service experience analysis of a target service on the terminal device or wireless quality analysis. In some embodiments of this application, the mobility analysis includes analysis of a position of the terminal device and/or analysis of a path of the terminal device. In some embodiments of this application, the communication characteristics analysis includes analysis of at least one of the following information of the terminal device: a communication cycle, communication time, a domain name used for communication, a slice used for communication, a port number used for communication, or data amount.

In some embodiments of this application, the method further includes the following operation.

Registration information is sent to a data analysis and management function. The registration information includes the first data analysis identifier.

For example, after the terminal device sends the registration information to the data analysis and management function, if the first request message is received, the analysis result of the first data analysis can be sent.

For another example, the registration information may include the data analysis identifier capable of being provided by the terminal device. The data analysis identifier capable of being provided by the terminal device may include the first data analysis identifier. For another example, the registration information may include part of data analysis identifiers capable of being provided by the terminal device. The part of data analysis identifiers includes the first data analysis identifier.

It is to be noted that, the data analysis identifier capable of being provided by the terminal device may be understood as an identifier corresponding to the statistical or predictable analysis that is supported by the terminal device. For example, the data of the terminal device that is analyzed, predicted or counted by the terminal device may for the identifier corresponding to the analysis type of the analysis result.

In some embodiments of this application, the registration information further includes information of the terminal device.

In some embodiments of this application, the information of the terminal device includes routing information and/or identifier information. Optionally, the routing information includes information such as an Internet Protocol (IP) address and/or a Fully Qualified Domain Name (FQDN). The FQDN is also called a full domain name. Optionally, the identifier information includes at least one of: a Subscription Permanent Identifier (SUPI), a Mobile Subscriber International ISDN/PSTN Number (MSISDN), a Generic Public Subscription Identifier (GPSI), or a near field communication identifier.

In some embodiments of this application, the first data analysis identifier includes part or all of data analysis identifiers capable of being provided by the terminal device.

In other words, the analysis result of the first data analysis sent by the terminal device may be part or all analysis results that may be shared or provided by the terminal device. Or the analysis result of the first data analysis sent by the terminal device may be the analysis result of the statistical or predictable analysis that is supported by the terminal device.

In some embodiments of this application, S210 may include the following operation.

The first request message sent by a request device is received.

Or, the first request message sent by the request device is received by means of a data analysis and management function.

In other words, the first request message may be a message sent by the request device, or may be a message from the data analysis and management function. In other words, the terminal device sends the analysis result of the first data analysis to the request device; or the terminal device sends, by means of the data analysis and management function, the analysis result of the first data analysis to the request device.

In some embodiments of this application, the request device is a network device or other terminal device.

In some embodiments of this application, the network device includes at least one of: the data analysis and management function, Network Data Analytics Function (NWDAF), an Application Function (AF), a Policy Control Function (PCF), an Access and Mobility Management Function (AMF), a Session Management Function (SMF), or an access network device. Optionally, the data analysis and management function includes at least one of the following network elements or network devices: NWDAF, AF, PCF, Unified Data Management (UDM), or Network Repository Function (NRF).

In some embodiments of this application, the first request message and the analysis result of the first data analysis are both carried in a user plane message; or the first request message and the analysis result of the first data analysis are both carried in a Non Access Stratum (NAS) message; or communication modes of the first request message and the analysis result of the first data analysis are both near field communication modes.

For example, assuming that the request device is the network device, the network device sends, based on the information of the terminal device, the first request message to the terminal device and receives the analysis result of the first data analysis. In an implementation, the information of the terminal device obtained by the network device is the routing information of the terminal device, for example, an IP address information. The network device may directly send the first request message to the terminal device by means of a user plane message, and obtains, by means of the user plane message, the analysis result of the first data analysis sent by the terminal device. In another implementation, the information of the terminal device obtained by the network device is an identifier of the terminal device such as SUPI and MSISDN. Then, the network device may first send the first request message to the AMF of the terminal device by means of the control plane message, such that the AMF then sends the first request message to the terminal device by means of the NAS message. In other words, the terminal device may send the analysis result of the first data analysis to the AMF by means of the NAS message, such that the AMF then sends the analysis result of the first data analysis to the network device by means of the control plane message.

For another example, assuming that the request device is another terminal device, another terminal device may send the first request message to the terminal device by means of the user plane message, and obtain, by means of the user plane message, the analysis result of the first data analysis sent by the terminal device. Alternatively, another terminal device may also send the first request message to the terminal device by means of a near field communication mode and acquire the analysis result of the first data analysis sent by the terminal device.

In some embodiments of this application, the method 200 may further include the following operation.

A broadcast message is sent to another terminal device. The broadcast message includes the first data analysis identifier.

For an example, the terminal device broadcasts the data analysis identifier capable of being provided by the terminal device. The data analysis identifier capable of being provided may include the first data analysis identifier, such that other terminal device can send the first request message based on the broadcast data analysis identifier. For another example, the terminal device broadcasts part of data analysis identifiers capable of being provided by the terminal device. The part of data analysis identifiers may include the first data analysis identifier.

The preferred implementations of this application are described in detail above with reference to the drawings. However, this application is not limited to the specific details in the above implementations, and within the scope of the technical concept of this application, various simple modifications can be made to the technical solutions of this application, and these simple modifications all fall within the protection scope of this application. For example, each specific technical feature described in the above specific implementations can be combined in any suitable manner without contradiction. In order to avoid unnecessary repetition, various possible combinations are not described separately in this application. For another example, the various implementations of this application can also be combined arbitrarily, as long as without departing from the spirit of this application, and should also be regarded as the contents disclosed in this application.

It should also be understood that, in various method embodiments of this application, the sequence number of each process does not mean the sequence of execution. The execution sequence of each process should be determined by its functions and internal logic, which should not constitute any limitation on the implementation process of the embodiments of this application. In addition, in the embodiments of this application, the terms "downlink" and "uplink" are configured to indicate the transmission direction of a signal or data. Herein, "downlink" is configured to indicate that the transmission direction of the signal or data is a first direction sent from a site to the UE of a cell, and "uplink" is configured to indicate that the transmission direction of the signals or data is a second direction sent from the UE of the cell to the site. For example, a "downlink signal" indicates that the transmission direction of the signal is the first direction. In addition, in the embodiments of this application, the term "and/or" is merely an association relationship describing related objects, which means that there may be three relationships. Specifically, A and/or B may indicate three cases: A exists alone, A and B exist simultaneously, and B exists alone. In addition, the character "/" in this paper generally indicates that the related objects are in an "or" relationship.

The wireless communication method provided in the embodiments of this application is described in detail above from the perspective of the terminal device with reference to FIG. 2. The wireless communication method provided in the embodiments of this application is described in detail below from the perspective of the request device with reference to FIG. 3.

FIG. 3 is a schematic flowchart of a wireless communication method 300 according to an embodiment of this application. The method 300 may be executed by the request device. The request device may be a network device or other terminal device. For example, the network device may be any one of the access network device, the NWDAF, the AF, the PCF, the AMF, or the SMF shown in FIG. 1.

As shown in FIG. 3, the method 300 may include the following steps.

At S310, a first request message is sent. The first request message is used for requesting, from a terminal device, a first data analysis corresponding to a first data analysis identifier.

At S320, an analysis result of the first data analysis is received.

In some embodiments of this application, the first data analysis is a statistical or predictable analysis that is supported by the terminal device.

In some embodiments of this application, the first data analysis includes at least one of: mobility analysis of the terminal device, communication characteristics analysis of the terminal device, performance analysis of the terminal device, service experience analysis of a target service on the terminal device or wireless quality analysis.

In some embodiments of this application, the mobility analysis includes analysis of a position of the terminal device and/or analysis of a path of the terminal device.

In some embodiments of this application, the communication characteristics analysis includes analysis of at least one of the following information of the terminal device: a communication cycle, communication time, a domain name used for communication, a slice used for communication, a port number used for communication, or data amount.

In some embodiments of this application, the method 300 may further include the following operation.

Information of the terminal device and the first data analysis identifier are acquired.

In some embodiments of this application, the method 300 may further include the following operations.

A query message is sent to a data analysis and management function. The query message is used for querying the first data analysis identifier and/or the information of the terminal device.

A response message of the query message is acquired.

In some embodiments of this application, the information of the terminal device includes routing information and/or identifier information.

In some embodiments of this application, the routing information includes an IP address and/or an FQDN.

In some embodiments of this application, the identifier information includes at least one of: an SUPI, an MSISDN, a GPSI, or a near field communication identifier.

In some embodiments of this application, the first data analysis identifier includes part or all of data analysis identifiers capable of being provided by the terminal device.

In some embodiments of this application, S310 may include the following operations.

The first request message is sent to the terminal device.

Or the first request message is sent to the terminal device by means of the data analysis and management function.

In some embodiments of this application, the method 300 may be applied to a network device or other terminal device.

In some embodiments of this application, the network device includes at least one of: the data analysis and management function, an NWDAF, an AF, a PCF, an AMF, an SMF, or an access network device.

In some embodiments of this application, the data analysis and management function includes at least one of: an NWDAF, an AF, a PCF, Unified Data Management (UDM), or a Network Repository Function (NRF).

In some embodiments of this application, the first request message and the analysis result of the first data analysis are both carried in a user plane message; or the first request message and the analysis result of the first data analysis are both carried in a control plane message; or communication modes of the first request message and the analysis result of the first data analysis are both near field communication modes.

In some embodiments of this application, the method 300 may further include the following operation.

A broadcast message sent by the terminal device is received. The broadcast message includes the first data analysis identifier.

It should be understood that, for steps in the method 300, refer to corresponding steps in the method 200. For simplicity, elaborations are omitted herein.

FIG. 3 is a schematic flowchart of a wireless communication method 300 according to an embodiment of this application. The method 300 may be executed by the data analysis and management function, for example, may be executed by a management device having a data management function. Optionally, the data analysis and management function includes at least one of: an NWDAF, an AF, a PCF, UDM, or an NRF, for example, the NWDAF, the AF, the PCF, the UDM, or the NRF shown in FIG. 1.

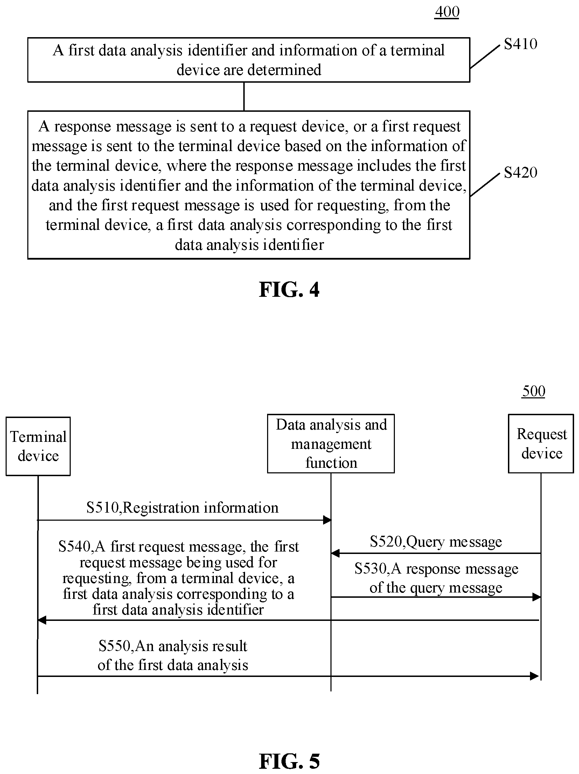

As shown in FIG. 4, the method 400 may include the following steps.

At S410, a first data analysis identifier and information of a terminal device are determined.

At S420, a response message is sent to a request device or, a first request message is sent to the terminal device based on the information of the terminal device. The response message includes the first data analysis identifier or the information of the terminal device. The first request message is used for requesting, from the terminal device, a first data analysis corresponding to the first data analysis identifier.

In some embodiments of this application, the first data analysis is a statistical or predictable analysis that is supported by the terminal device.

In some embodiments of this application, the first data analysis includes at least one of: mobility analysis of the terminal device, communication characteristics analysis of the terminal device, performance analysis of the terminal device, service experience analysis of a target service on the terminal device or wireless quality analysis.

In some embodiments of this application, the mobility analysis includes analysis of a position of the terminal device and/or analysis of a path of the terminal device.

In some embodiments of this application, the communication characteristics analysis includes analysis of at least one of the following information of the terminal device: a communication cycle, communication time, a domain name used for communication, a slice used for communication, a port number used for communication, or data amount.

In some embodiments of this application, the method further includes the following operation.

A registration information sent by the terminal device is received. The registration information includes the first data analysis identifier.

In some embodiments of this application, the registration information further includes information of the terminal device.

In some embodiments of this application, the information of the terminal device includes routing information and/or identifier information.

In some embodiments of this application, the routing information includes an IP address and/or an FQDN.

In some embodiments of this application, the identifier information includes at least one of: a SUPI, an MSISDN, a GPSI, or a near field communication identifier.

In some embodiments of this application, the first data analysis identifier includes part or all of data analysis identifiers capable of being provided by the terminal device.

In some embodiments of this application, the method 400 may further include the following operations.

An analysis result of the first data analysis sent by the terminal device is received.

The analysis result of the first data analysis is forwarded to the request device.

In some embodiments of this application, the method 400 may further include the following operations.

A second request message sent by the request device is received.

The first request message is determined based on the second request message.

In some embodiments of this application, the second request message includes at least one data analysis identifier and information used for determining the terminal device. The first data analysis identifier includes a data analysis identifier capable of being provided by the terminal device among the at least one data analysis identifier.

In some embodiments of this application, the second request message includes at least one data analysis identifier. The terminal device is a terminal device corresponding to the at least one data analysis identifier.

In some embodiments of this application, the second request message includes information used for determining the terminal device. The first data analysis identifier includes a data analysis identifier capable of being provided by the terminal device.

In some embodiments of this application, the method 400 may further include the following operation.

A query message sent by the request device is received. The query message is used for querying the first data analysis identifier and/or the information of the terminal device.

In some embodiments of this application, the query message includes at least one data analysis identifier and information used for determining the terminal device. The first data analysis identifier includes a data analysis identifier capable of being provided by the terminal device among the at least one data analysis identifier.

In some embodiments of this application, the query message includes at least one data analysis identifier. The terminal device is a terminal device corresponding to the at least one data analysis identifier.

In some embodiments of this application, the query message includes information used for determining the terminal device. The first data analysis identifier includes a data analysis identifier capable of being provided by the terminal device.

In some embodiments of this application, the request device is a network device or other terminal device.

In some embodiments of this application, the network device includes at least one of: the data analysis and management function, an NWDAF, an AF, a PCF, an AMF, an SMF, or an access network device.

In some embodiments of this application, the first request message and the analysis result of the first data analysis are both carried in a user plane message; or the first request message and the analysis result of the first data analysis are both carried in a control plane message; or communication modes of the first request message and the analysis result of the first data analysis are both near field communication modes.

It should be understood that, for steps in the method 400, refer to the corresponding steps in the method 200 or the method 300. For simplicity, elaborations are omitted herein.

FIG. 5 is a schematic flowchart of a wireless communication method 500 according to an embodiment of this application.

As shown in FIG. 5, the method 500 may include part of all of the following content.

At S510, a terminal device sends registration information to a data analysis and management function.

For example, the terminal device registers a data analysis identifier (Analytic Id) supportable by itself to the data analysis and management function of a core network. That is to say, the registration information may include the data analysis identifier capable of being provided by the terminal device or supportable by the terminal device. Optionally, the registration information may further include the information of the terminal device, for example, a SUPI, an MSISDN, a GPSI, an IP address, or a near field communication identifier.

At S520, a request device sends a query message to the data analysis and management function.

At S530, the data analysis and management function sends a response message of the query message to the request device.

For example, when the request device needs to request the analysis result of the data analysis of the terminal device, the request device may determine a first data analysis identifier and the information of the terminal device by means of the response message of the query message. For example, the first data analysis identifier is sent to the data analysis and management function, so as to obtain the information of the terminal device that supports the first data analysis identifier. For another example, the information of the terminal device is sent to the data analysis and management function, so as to obtain the first data analysis identifier that is supported by the terminal device. For another example, a combination of the information of the terminal device and the first data analysis identifier is sent to the data analysis and management function, so as to obtain a result of determining whether the terminal device supports the first data analysis identifier.

At S540, the request device sends a first request message to the terminal device. The first request message is used for requesting, from a terminal device, a first data analysis corresponding to a first data analysis identifier.

At S550, the terminal device sends the analysis result of the first data analysis to the request device.

For example, assuming that the request device is the network device, the network device sends, based on the information of the terminal device, the first request message to the terminal device and receives the analysis result of the first data analysis. In an implementation, the information of the terminal device obtained by the network device is the routing information of the terminal device, for example, an IP address information. The network device may directly send the first request message to the terminal device by means of a user plane message, and obtains, by means of the user plane message, the analysis result of the first data analysis sent by the terminal device. In another implementation, the information of the terminal device obtained by the network device is an identifier of the terminal device such as SUPI and MSISDN. Then, the network device may first send the first request message to the AMF of the terminal device by means of the control plane message, such that the AMF then sends the first request message to the terminal device by means of the NAS message. In other words, the terminal device may send the analysis result of the first data analysis to the AMF by means of the NAS message, such that the AMF then sends the analysis result of the first data analysis to the network device by means of the control plane message.

For another example, assuming that the request device is another terminal device, another terminal device may send the first request message to the terminal device by means of the user plane message, and obtain, by means of the user plane message, the analysis result of the first data analysis sent by the terminal device. Alternatively, another terminal device may also send the first request message to the terminal device by means of a near field communication mode and acquire the analysis result of the first data analysis sent by the terminal device.

It is to be noted that, S510 to S530 may be optional steps. That is to say, the request device may directly send the first request message to the terminal device, and then receives the analysis result of the first data analysis sent by the terminal device. Definitely, the data analysis and management function and the request device may also be the same network element or the same device.

It should be understood that, for steps and related content in the method 500, refer to the corresponding steps and related content in the methods 200 to 400. For simplicity, elaborations are omitted herein, for example, related descriptions such as the first data analysis, the first data identifier, the request device and the data analysis and management function.

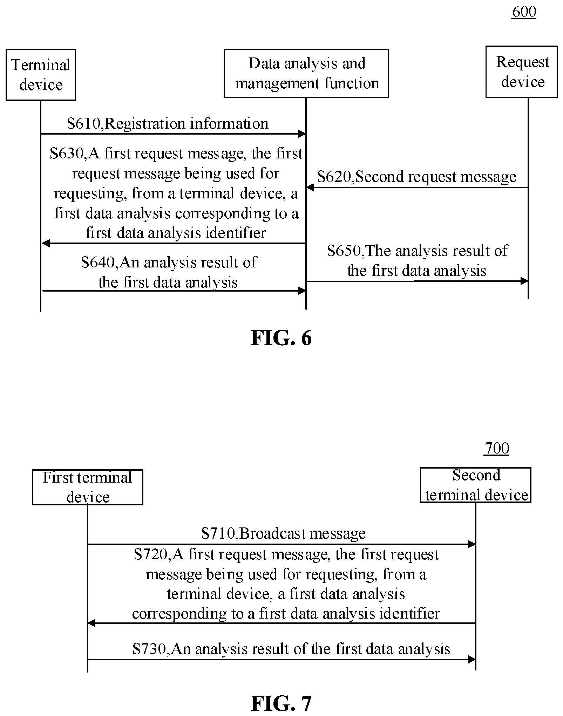

FIG. 6 is a schematic flowchart of a wireless communication method 600 according to an embodiment of this application.

As shown in FIG. 6, the method 600 may include part of all of the following content.

At S610, a terminal device sends registration information to a data analysis and management function.

For example, the terminal device registers a data analysis identifier (Analytic Id) supportable by itself to the data analysis and management function of a core network. That is to say, the registration information may include the data analysis identifier capable of being provided by the terminal device or supportable by the terminal device. Optionally, the registration information may further include the information of the terminal device, for example, a SUPI, an MSISDN, a GPSI, an IP address, or a near field communication identifier.

At S620, a request device sends a second request message to the data analysis and management function.

At S630, the data analysis and management function sends a first request message to the terminal device. The first request message is used for requesting, from a terminal device, a first data analysis corresponding to a first data analysis identifier.

At S640, the terminal device sends the analysis result of the first data analysis to the data analysis and management function.

In other words, the data analysis and management function determines the first request message based on the received second request message, then sends the first request message to the terminal device, and receives the analysis result of the first data analysis sent by the terminal device.

Or, when the request device needs to request the analysis result of the data analysis of the terminal device, the second request message is sent to the data analysis and management function. The data analysis and management function determines the first data analysis identifier and the information of the terminal device, and sends, based on the information of the terminal device, the first request message that is used for requesting the analysis result of the data analysis corresponding to the first data analysis identifier to the terminal device. That is to say, the data analysis and management function requests, from the terminal device, the analysis result of the data analysis corresponding to the first data analysis identifier instead of the request device.

For example, the request device sends the first data analysis identifier to the data analysis and management function; and then the data analysis and management function determines the terminal device corresponding to the first data analysis identifier and sends the first data analysis identifier to the terminal device corresponding to the first data analysis identifier. For another example, the request device sends the information of the terminal device to the data analysis and management function; and then the data analysis and management function determines the first data analysis identifier, that is, the data analysis identifier capable of being provided by the terminal device. Then, the data analysis and management function requests, from the terminal device, the data analysis capable of being provided by the terminal device. For another example, the request device sends the information of the terminal device and at least one data analysis identifier to the data analysis and management function. The data analysis and management function determines a first data analysis identifier among the at least one data analysis identifier, that is, the data analysis identifier supportable by the terminal device. Then, the data analysis and management function requests, from the terminal device, the data analysis identifier supportable by the terminal device.

For example, the data analysis and management function sends, based on the information of the terminal device, the first request message to the terminal device and receives the analysis result of the first data analysis. In an implementation, the information of the terminal device obtained by the data analysis and management function is the routing information of the terminal device, for example, an IP address information. The data analysis and management function may directly send the first request message to the terminal device by means of a user plane message, and obtains, by means of the user plane message, the analysis result of the first data analysis sent by the terminal device. In another implementation, the information of the terminal device obtained by the data analysis and management function is an identifier of the terminal device such as SUPI and MSISDN. Then, the data analysis and management function may first send the first request message to the AMF of the terminal device by means of the control plane message, such that the AMF then sends the first request message to the terminal device by means of the NAS message. In other words, the terminal device may send the analysis result of the first data analysis to the AMF by means of the NAS message, such that the AMF then sends the analysis result of the first data analysis to the data analysis and management function by means of the control plane message.

At S650, the data analysis and management function sends the analysis result of the first data analysis to the request device.

It should be understood that, for steps and related content in the method 600, refer to the corresponding steps and related content in the methods 200 to 400. For simplicity, elaborations are omitted herein, for example, related descriptions such as the first data analysis, the first data identifier, the request device and the data analysis and management function.

FIG. 7 is a schematic flowchart of a wireless communication method 700 according to an embodiment of this application.

As shown in FIG. 7, the method 700 may include part of all of the following content.

At S710, a first terminal device sends a broadcast message to a second terminal device.

At S720, the second terminal device sends a first request message to the first terminal device. The first request message is used for requesting, from a terminal device, a first data analysis corresponding to a first data analysis identifier.

At S730, the first terminal device sends the analysis result of the first data analysis to the second terminal device.

For example, the first terminal device and the second terminal device support a near field communication. The first terminal device broadcasts a data analysis identifier that is supported by itself. The second terminal device determines, according to the received broadcast, the data analysis identifier that is supported by the first terminal device. When the second terminal device needs to request the analysis result of the data analysis of the first terminal device, the second terminal device sends, by means of a near field communication mode, the first request message including the first data analysis identifier to the first terminal device, and obtains the analysis result of the corresponding data analysis. The near field communication mode includes, but is not limited to, a Bluetooth technology and a Wireless Fidelity (Wi-Fi) technology.

It should be understood that, for steps and related content in the method 700, refer to the corresponding steps and related content in the methods 200 to 400. For simplicity, elaborations are omitted herein, for example, related descriptions such as the first data analysis and the first data identifier.

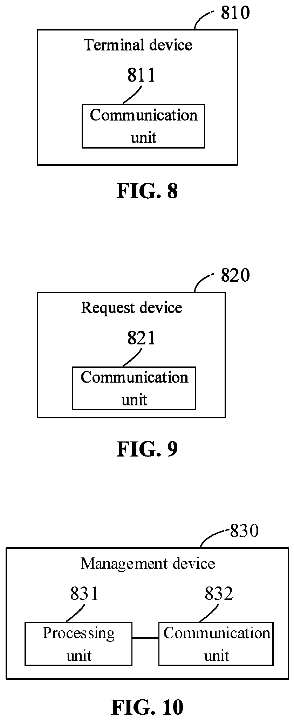

The method embodiments of this application are described in detail above in combination with FIG. 1 to FIG. 7. The apparatus embodiments of this application are described in detail below in combination with FIG. 8 to FIG. 12.

FIG. 8 is a schematic block diagram of a terminal device 810 according to an embodiment of this application.

As shown in FIG. 8, the terminal device 810 includes a communication unit 811. The communication unit 811 is configured to perform the following operations.

A first request message is received. The first request message is used for requesting, from a terminal device, a first data analysis corresponding to a first data analysis identifier.

An analysis result of the first data analysis is sent.

In some embodiments of this application, the first data analysis is a statistical or predictable analysis that is supported by the terminal device.

In some embodiments of this application, the first data analysis includes at least one of: mobility analysis of the terminal device, communication characteristics analysis of the terminal device, performance analysis of the terminal device, service experience analysis of a target service on the terminal device or wireless quality analysis.

In some embodiments of this application, the mobility analysis includes analysis of a position of the terminal device and/or analysis of a path of the terminal device.

In some embodiments of this application, the communication characteristics analysis includes analysis of at least one of the following information of the terminal device: a communication cycle, communication time, a domain name used for communication, a slice used for communication, a port number used for communication, or data amount.

In some embodiments of this application, the communication unit 811 may further be configured to perform the following operation.

Registration information is sent to a data analysis and management function. The registration information includes the first data analysis identifier.

In some embodiments of this application, the registration information further includes information of the terminal device.

In some embodiments of this application, the information of the terminal device includes routing information and/or identifier information.

In some embodiments of this application, the routing information includes an IP address and/or an FQDN.

In some embodiments of this application, the identifier information includes at least one of: a SUPI, an MSISDN, a GPSI, or a near field communication identifier.

In some embodiments of this application, the first data analysis identifier includes part or all of data analysis identifiers capable of being provided by the terminal device.

In some embodiments of this application, the communication unit 811 may specifically be configured to perform the following operations.

The first request message sent by a request device is received.

Or, the first request message sent by the request device is received by means of the data analysis and management function.

In some embodiments of this application, the request device is a network device or other terminal device.

In some embodiments of this application, the network device includes at least one of: the data analysis and management function, an NWDAF, an AF, a PCF, an AMF, an SMF, or an access network device.

In some embodiments of this application, the data analysis and management function includes at least one of: an NWDAF, an AF, a PCF, Unified Data Management (UDM), or a Network Repository Function (NRF).

In some embodiments of this application, the first request message and the analysis result of the first data analysis are both carried in a user plane message; or the first request message and the analysis result of the first data analysis are both carried in a Non Access Stratum (NAS) message; or communication modes of the first request message and the analysis result of the first data analysis are both near field communication modes.

In some embodiments of this application, the communication unit 811 may further be configured to perform the following operation.

A broadcast message is sent to another terminal device. The broadcast message includes the first data analysis identifier.

It should be understood that, the apparatus embodiments may mutually correspond to the method embodiments, and for similar descriptions, refer to the method embodiments. Specifically, the terminal device 810 shown in FIG. 8 may correspond to the corresponding subject in the method embodiments of this application. The above and other operations and/or functions of each unit in the terminal device 810 are corresponding processes in the above methods. For the sake of brevity, details are not described herein again.

FIG. 9 is a schematic block diagram of a request device 820 according to an embodiment of this application.

As shown in FIG. 9, the request device 820 includes a communication unit 821. The communication unit 821 is configured to perform the following operations.

A first request message is sent. The first request message is used for requesting, from a terminal device, a first data analysis corresponding to a first data analysis identifier.

An analysis result of the first data analysis is received.

In some embodiments of this application, the first data analysis is a statistical or predictable analysis that is supported by the terminal device.

In some embodiments of this application, the first data analysis includes at least one of: mobility analysis of the terminal device, communication characteristics analysis of the terminal device, performance analysis of the terminal device, service experience analysis of a target service on the terminal device or wireless quality analysis.

In some embodiments of this application, the mobility analysis includes analysis of a position of the terminal device and/or analysis of a path of the terminal device.

In some embodiments of this application, the communication characteristics analysis includes analysis of at least one of the following information of the terminal device: a communication cycle, communication time, a domain name used for communication, a slice used for communication, a port number used for communication, or data amount.

In some embodiments of this application, the communication unit 821 may further be configured to perform the following operation.

Information of the terminal device and the first data analysis identifier are acquired.

In some embodiments of this application, the communication unit 821 may further be configured to perform the following operation.

A query message is sent to a data analysis and management function. The query message is used for querying the first data analysis identifier and/or the information of the terminal device.

A response message of the query message is acquired.

In some embodiments of this application, the information of the terminal device includes routing information and/or identifier information.

In some embodiments of this application, the routing information includes an IP address and/or an FQDN.

In some embodiments of this application, the identifier information includes at least one of: a SUPI, an MSISDN, a GPSI, or a near field communication identifier.

In some embodiments of this application, the first data analysis identifier includes part or all of data analysis identifiers capable of being provided by the terminal device.

In some embodiments of this application, the communication unit 821 may specifically be configured to perform the following operations.

The first request message is sent to the terminal device.

Or, the first request message is sent to the terminal device by means of the data analysis and management function.

In some embodiments of this application, the request device 820 is a network device or other terminal device.

In some embodiments of this application, the network device includes at least one of: the data analysis and management function, an NWDAF, an AF, a PCF, an AMF, an SMF, or an access network device.

In some embodiments of this application, the data analysis and management function includes at least one of: an NWDAF, an AF, a PCF, Unified Data Management (UDM), or a Network Repository Function (NRF).

In some embodiments of this application, the first request message and the analysis result of the first data analysis are both carried in a user plane message; or the first request message and the analysis result of the first data analysis are both carried in a control plane message; or communication modes of the first request message and the analysis result of the first data analysis are both near field communication modes.

In some embodiments of this application, the communication unit 821 may further be configured to perform the following operation.

A broadcast message sent by the terminal device is received. The broadcast message includes the first data analysis identifier.

It should be understood that, the apparatus embodiments may mutually correspond to the method embodiments, and for similar descriptions, refer to the method embodiments. Specifically, the request device 820 shown in FIG. 9 may correspond to the corresponding subject in the method embodiments of this application. The above and other operations and/or functions of each unit in the request device 820 are corresponding processes in the above methods. For the sake of brevity, details are not described herein again.

FIG. 10 is a schematic block diagram of a management device 830 according to an embodiment of this application.

As shown in FIG. 10, the management device 830 includes a processing unit and a communication unit.

The processing unit 831 is configured to determine a first data analysis identifier and information of a terminal device.

The communication unit 832 is configured to send a response message to a request device, or send a first request message to the terminal device based on the information of the terminal device. The response message includes the first data analysis identifier or the information of the terminal device. The first request message is used for requesting, from the terminal device, a first data analysis corresponding to the first data analysis identifier.

In some embodiments of this application, the first data analysis is a statistical or predictable analysis that is supported by the terminal device.

In some embodiments of this application, the first data analysis includes at least one of: mobility analysis of the terminal device, communication characteristics analysis of the terminal device, performance analysis of the terminal device, service experience analysis of a target service on the terminal device or wireless quality analysis.

In some embodiments of this application, the mobility analysis includes analysis of a position of the terminal device and/or analysis of a path of the terminal device.

In some embodiments of this application, the communication characteristics analysis includes analysis of at least one of the following information of the terminal device: a communication cycle, communication time, a domain name used for communication, a slice used for communication, a port number used for communication, or data amount.

In some embodiments of this application, the communication unit 832 may further be configured to perform the following operation.

A registration information sent by the terminal device is received. The registration information includes the first data analysis identifier.

In some embodiments of this application, the registration information further includes information of the terminal device.

In some embodiments of this application, the information of the terminal device includes routing information and/or identifier information.

In some embodiments of this application, the routing information includes an IP address and/or an FQDN.

In some embodiments of this application, the identifier information includes at least one of: a SUPI, an MSISDN, a GPSI, or a near field communication identifier.

In some embodiments of this application, the first data analysis identifier includes part or all of data analysis identifiers capable of being provided by the terminal device.

In some embodiments of this application, the communication unit 832 may further be configured to perform the following operation.

An analysis result of the first data analysis sent by the terminal device is received.

The analysis result of the first data analysis is forwarded to the request device.

In some embodiments of this application, the communication unit 832 may further be configured to perform the following operations.

A second request message sent by the request device is received.

The first request message is determined based on the second request message.

In some embodiments of this application, the second request message includes at least one data analysis identifier and information used for determining the terminal device. The first data analysis identifier includes a data analysis identifier capable of being provided by the terminal device among the at least one data analysis identifier.

In some embodiments of this application, the second request message includes at least one data analysis identifier. The terminal device is a terminal device corresponding to the at least one data analysis identifier.

In some embodiments of this application, the second request message includes information used for determining the terminal device. The first data analysis identifier includes a data analysis identifier capable of being provided by the terminal device.

In some embodiments of this application, the communication unit 832 may further be configured to perform the following operation.

A query message sent by the request device is received. The query message is used for querying the first data analysis identifier and/or the information of the terminal device.

In some embodiments of this application, the query message includes at least one data analysis identifier and information used for determining the terminal device. The first data analysis identifier includes a data analysis identifier capable of being provided by the terminal device among the at least one data analysis identifier.

In some embodiments of this application, the query message includes at least one data analysis identifier. The terminal device is a terminal device corresponding to the at least one data analysis identifier.

In some embodiments of this application, the query message includes information used for determining the terminal device. The first data analysis identifier includes a data analysis identifier capable of being provided by the terminal device.

In some embodiments of this application, the request device is a network device or other terminal device.

In some embodiments of this application, the network device includes at least one of: the data analysis and management function, an NWDAF, an AF, a PCF, an AMF, an SMF, or an access network device.

In some embodiments of this application, the management device is the data analysis and management function.

In some embodiments of this application, the data analysis and management function includes at least one of: an NWDAF, an AF, a PCF, Unified Data Management (UDM), or a Network Repository Function (NRF).

In some embodiments of this application, the first request message and the analysis result of the first data analysis are both carried in a user plane message; or the first request message and the analysis result of the first data analysis are both carried in a control plane message; or communication modes of the first request message and the analysis result of the first data analysis are both near field communication modes.

It should be understood that, the apparatus embodiments may mutually correspond to the method embodiments, and for similar descriptions, refer to the method embodiments. Specifically, the management device 830 shown in FIG. 10 may correspond to the corresponding subject in the method embodiments of this application. The above and other operations and/or functions of each unit in the management device 830 are corresponding processes in the above methods. For the sake of brevity, details are not described herein again.

The communication device in the embodiments of this application is described above from the perspective of a functional module with reference to the drawings. It should be understood that, the functional module can be implemented in the form of hardware, or may be implemented by means of an instruction in the form of software, or may be implemented by means of a combination of hardware and software modules.

Specifically, the steps of the method embodiments in the embodiments of this application may be completed by means of an integrated logic circuit of hardware in a processor and/or an instruction in the form of software. In combination with the method disclosed in the embodiments of the present application, the steps may be directly implemented by a hardware processor, or may be performed by a combination of hardware and software modules in the decoding processor.

Optionally, the software module may be located in a mature storage medium in the field such as a Random Access Memory (RAM), a flash memory, a Read-Only Memory

(ROM), a Programmable ROM (PROM) or Electrically Erasable PROM (EEPROM), and a register. The storage medium is located in a memory, and the processor reads information in the memory, and completes the steps in the method embodiments in combination with hardware.

For example, the processing unit and the communication unit involved above may be respectively implemented by the processor and the transceiver.

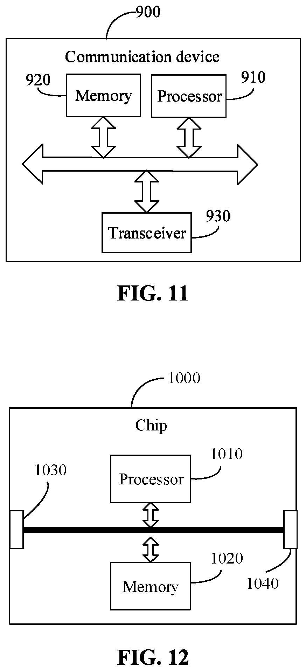

FIG. 11 is a schematic structural diagram of a communication device 900 according to an embodiment of this application.

As shown in FIG. 11, the communication device 900 may include a processor 910.

The processor 910 may call and run the computer program in the memory to implement the method in the embodiments of this application.

Continuously referring to FIG. 11, the communication device 900 may further include a memory 920.

The memory 920 may be configured to store indication information, and may further be configured to store a code, an instruction and the like executed by the processor 910. The processor 910 may invoke and run the computer program in the memory 920 to implement the method in the embodiments of this application. The memory 920 may be an independent device independent of the processor 910 and may also be integrated into the processor 910.

Continuously referring to FIG. 11, the communication device 900 may further include a transceiver 930.

The processor 910 may control the transceiver 930 to communicate with another device, specifically transmitting information or data to another device or receiving information or data transmitted by another device. The transceiver 930 may include a transmitter and a receiver. The transceiver 930 may further include antennae, and there may be one or more antennae.

It should be understood that, the assemblies in the communication device 900 are connected to each other by means of a bus system. The bus system, in addition to including a data bus, further includes a power bus, a control bus and a state signal bus.

It should also be understood that, the communication device 900 may be the terminal device in the embodiments of this application. The communication device 900 may implement corresponding processes implemented by the terminal device in each method of the embodiments of this application. That is to say, the communication device 900 in the embodiments of this application may correspond to the communication device xxxx in the embodiments of this application, and may correspond to the corresponding subject for executing the method 200 in the embodiments of this application. For the sake of brevity, details are not described herein again. Similarly, the communication device 900 may be a network device in this embodiment of this application. The communication device 900 may implement corresponding flows implemented by the network device in each method of the embodiments of this application. That is to say, the communication device 900 in the embodiments of this application may correspond to the communication device xxxx in the embodiments of this application, and may correspond to the corresponding subject for executing the method 200 in the embodiments of this application. For the sake of brevity, details are not described herein again.

In addition, an embodiment of this application further provides a chip.

For example, the chip may be an integrated circuit chip, and has a signal processing capacity. Each method, step and logical block diagram disclosed in the embodiments of this application may be implemented or executed. The chip may further be called a system-level chip, a system chip, a chip system, or a system on chip. Optionally, the chip may be applied to various communication devices, such that the communication device having the chip mounted can execute each method, step and logical block diagram disclosed in the embodiments of this application.

FIG. 12 is a schematic structural diagram of a chip 1000 according to an embodiment of the present application.

As shown in FIG. 12, the chip 1000 may include a processor 1010.

The processor 1010 may call and run the computer program in the memory to implement the method in the embodiments of this application.

Continuously referring to FIG. 12, the chip 1000 may further include a memory 1020.

The processor 1010 may invoke and run the computer program in the memory 1020 to implement the method in the embodiments of this application. The memory 1020 may be configured to store indication information, and may further be configured to store a code, an instruction and the like executed by the processor 1010. The memory 1020 may be an independent device independent of the processor 1010 and may also be integrated into the processor 1010.

Continuously referring to FIG. 12, the chip 1000 may further include an input interface 1030.

The processor 1010 may control the input interface 1030 to communicate with another device or chip, specifically acquiring information or data transmitted by another device or chip.

Continuously referring to FIG. 12, the chip 1000 may further include an output interface 1040.

The processor 1010 may control the output interface 1040 to communicate with another device or chip, specifically outputting information or data transmitted by another device or chip.

It should be understood that, the chip 1000 is applicable to the network device in the embodiments of this application, and the chip may implement corresponding flows implemented by the network device in each method of the embodiments of this application, or may implement corresponding processes implemented by the terminal device in each method of the embodiments of this application. For the sake of brevity, details are not described herein again.

It should also be understood that, the assemblies in the chip 1000 are connected to each other by means of a bus system. The bus system, in addition to including a data bus, further includes a power bus, a control bus and a state signal bus.

The processor mentioned above may include, but is not limited to:

a general processor, a Digital Signal Processor (DSP), an Application Specific Integrated Circuit (ASIC), a Field-Programmable Gate Array (FPGA) or other programmable logic devices, discrete gate or transistor logic devices, and discrete hardware components.

The processor may be configured to implement or execute each method, step and logical block diagram disclosed in the embodiments of this application. In combination with the method disclosed in the embodiments of the present application, the steps may be directly implemented by a hardware processor, or may be performed by a combination of hardware and software modules in the decoding processor. The software module may be located in a mature storage medium in the field such as a Random Access Memory (RAM), a flash memory, a Read-Only Memory (ROM), a Programmable ROM (PROM) or Erasable PROM (EPROM), and a register. The storage medium is located in a memory, and the processor reads information in the memory, and completes the steps of the method in combination with hardware.

The memory mentioned above includes, but is not limited to:

a volatile memory or a non-volatile memory. The non-volatile memory may be an ROM, a PROM, an Erasable PROM (EPROM), an EEPROM or a flash memory. The volatile memory may be an RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM).

It is to be noted that, the memory described here is intended to include memories of these and any other proper types.

An embodiment of this application further provides a computer-readable storage medium, configured to store a computer program. The computer-readable storage medium stores one or more programs. The one or more programs include instructions. The instructions, when being executed by a portable electronic device including a plurality of applications, enable the portable electronic device to execute the method of the method embodiments.

Optionally, the computer-readable storage medium is applicable to a network device in the embodiments of the present application, and the computer program causes a computer to execute corresponding flows implemented by the network device in each method of the embodiments of the present application. For simplicity, elaborations are omitted herein.

Optionally, the computer-readable storage medium is applicable to a mobile terminal/terminal device in the embodiments of this application, and the computer program causes a computer to execute corresponding flows implemented by the mobile terminal/terminal device in each method of the embodiments of this application. For simplicity, elaborations are omitted herein.

An embodiment of this application further provides a computer program product, including a computer program.

Optionally, the computer program product is applicable to a network device in the embodiments of the present application, and the computer program causes a computer to execute corresponding flows implemented by the network device in each method of the embodiments of the present application. For simplicity, elaborations are omitted herein.

Optionally, the computer program product is applicable to a mobile terminal/terminal device in the embodiments of this application, and the computer program causes a computer to execute corresponding flows implemented by the mobile terminal/terminal device in each method of the embodiments of this application. For simplicity, elaborations are omitted herein.

An embodiment of this application further provides a computer program. When the computer program is executed by a computer, the computer may execute the method of the method embodiments.

Optionally, the computer program is applicable to a network device in the embodiments of the present application. When the computer program is run on a computer, the computer executes corresponding flows implemented by the network device in each method of the embodiments of the present application. For simplicity, elaborations are omitted herein.

In addition, the embodiments of the application further provide a communication system, which may include the above terminal device and network device to form a communication system 100 shown in FIG. 1. For simplicity, elaborations are omitted herein. It is to be noted that the terms "system" and the like herein may also be referred to as "network management architecture" or "network system" and the like.

It is also to be understood that the terms used in the embodiments and the appended claims of the application are only for describing the specific embodiments and are not intended to limit the embodiments of the application.

For example, singular forms "alan", "said", "above" and "the" used in the embodiments and appended claims of the application are also intended to include plural forms unless other meanings are clearly expressed in the context.

Those of skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such implementation shall fall within the scope of the embodiments of this application.

If the function is implemented in the form of the software functional unit and sold or used as an independent product, it can be stored in the computer readable storage medium. Based on this understanding, the technical solutions of the embodiments of this application essentially or the parts that contribute to the prior art, or part of the technical solutions can be embodied in the form of a software product. The computer software product is stored in a storage medium, including a plurality of instructions for causing a computer device (which may be a personal computer, a server, or a network device, and the like) to execute all or part of the steps of the method described in the embodiments of the present application. The foregoing storage medium includes a USB flash disk, a mobile hard disk drive, a Read-Only Memory (ROM), a Random Access Memory (RAM), and various media that can store program codes, such as a magnetic disk or an optical disk.

Those skilled in the art may clearly learn about that specific working processes of the system, device, and units described above may refer to the corresponding processes in the above method embodiments and will not be elaborated herein for ease and briefness of description.

In several embodiments provided by this application, it is to be understood that the disclosed system, apparatus and method may be implemented in other ways.

For example, the division of the units or modules or assemblies is merely a logical function division, and there may be other divisions in actual implementation. For example, a plurality of units or modules or assemblies may be combined or integrated into another system, or some units or modules or assemblies can be ignored, or not implemented.

For another example, the units/modules/assemblies described as separate/display components may or may not be physically separated, that is, may be located in one place, or may be distributed on the plurality of network units. Part or all of the units/modules/assemblies may be selected according to actual requirements to achieve the purposes of the embodiments of this application.

Finally, it is to be noted that, the displayed or discussed mutual coupling or direct coupling or communication connection may be indirect coupling or communication connection through some interfaces, devices or units, and may be in electrical, mechanical or other forms.

The above are only the specific implementations of the embodiments of this application and not intended to limit the scope of protection of the embodiments of this application. Any variations or replacements apparent to those skilled in the art within the technical scope disclosed by the embodiments of this application shall fall within the scope of protection of the embodiments of this application. Therefore, the scope of protection of the embodiments of this application shall be subject to the scope of protection of the claims.

## Claims

1. A wireless communication method, comprising:
receiving a first request message, wherein the first request message is used for requesting, from a terminal device, a first data analysis corresponding to a first data analysis identifier; and
sending an analysis result of the first data analysis.

2. The method of claim 1, wherein the first data analysis is a statistical or predictable analysis that is supported by the terminal device.

3. The method of claim 1 or 2, wherein the first data analysis comprises at least one of: mobility analysis of the terminal device, communication characteristics analysis of the terminal device, performance analysis of the terminal device, service experience analysis of a target service on the terminal device or wireless quality analysis.

4. The method of claim 3, wherein the mobility analysis comprises analysis of a position of the terminal device and/or analysis of a path of the terminal device.

5. The method of claim 3, wherein the communication characteristics analysis comprises analysis of at least one of the following information of the terminal device: a communication cycle, communication time, a domain name used for communication, a slice used for communication, a port number used for communication, or data amount.

6. The method of any of claims 1 to 5, further comprising:
sending registration information to a data analysis and management function, wherein the registration information comprises the first data analysis identifier.

7. The method of claim 6, wherein the registration information further comprises information of the terminal device.

8. The method of claim 7, wherein the information of the terminal device comprises routing information and/or identifier information.

9. The method of claim 8, wherein the routing information comprises an Internet Protocol, IP, address and/or a Fully Qualified Domain Name, FQDN.

10. The method of claim 8, wherein the identifier information comprises at least one of: a Subscription Permanent Identifier, SUPI, a Mobile Subscriber International ISDN/PSTN Number, MSISDN, a Generic Public Subscription Identifier, GPSI, or a near field communication identifier.

11. The method of any of claims 1 to 10, wherein the first data analysis identifier comprises part or all of data analysis identifiers capable of being provided by the terminal device.

12. The method of any of claims 1 to 11, wherein the receiving a first request message comprises:
receiving the first request message sent by a request device; or
receiving, by means of a data analysis and management function, the first request message sent by the request device.

13. The method of claim 12, wherein the request device is a network device or other terminal device.

14. The method of claim 13, wherein the network device comprises at least one of: the data analysis and management function, Network Data Analytics Function, NWDAF, an Application Function, AF, a Policy Control Function, PCF, an Access and Mobility Management Function, AMF, a Session Management Function, SMF, or an access network device.

15. The method of any of claims 6 to 10, 12 and 13, wherein the data analysis and management function comprises at least one of: an NWDAF, an AF, a PCF, Unified Data Management, UDM, or a Network Repository Function, NRF.

16. The method of any of claims 1 to 15, wherein the first request message and the analysis result of the first data analysis are both carried in a user plane message, or the first request message and the analysis result of the first data analysis are both carried in a Non Access Stratum, NAS, message, or communication modes of the first request message and the analysis result of the first data analysis are both near field communication modes.

17. The method of any of claims 1 to 16, further comprising:
sending a broadcast message to other terminal device, wherein the broadcast message comprises the first data analysis identifier.

18. A wireless communication method, comprising:
sending a first request message, wherein the first request message is used for requesting, from a terminal device, a first data analysis corresponding to a first data analysis identifier; and
receiving an analysis result of the first data analysis.

19. The method of claim 18, wherein the first data analysis is a statistical or predictable analysis that is supported by the terminal device.

20. The method of claim 18 or 19, wherein the first data analysis comprises at least one of: mobility analysis of the terminal device, communication characteristics analysis of the terminal device, performance analysis of the terminal device, service experience analysis of a target service on the terminal device or wireless quality analysis.

21. The method of claim 20, wherein the mobility analysis comprises analysis of a position of the terminal device and/or analysis of a path of the terminal device.

22. The method of claim 20, wherein the communication characteristics analysis comprises analysis of at least one of the following information of the terminal device: a communication cycle, communication time, a domain name used for communication, a slice used for communication, a port number used for communication, or data amount.

23. The method of any of claims 18 to 22, further comprising:
acquiring information of the terminal device and the first data analysis identifier.

24. The method of claim 23, further comprising:
sending a query message to a data analysis and management function, wherein the query message is used for querying the first data analysis identifier and/or the information of the terminal device; and
acquiring a response message of the query message.

25. The method of claim 23 or 24, wherein the information of the terminal device comprises routing information and/or identifier information.

26. The method of claim 25, wherein the routing information comprises an Internet Protocol, IP, address and/or a Fully Qualified Domain Name, FQDN.

27. The method of claim 25, wherein the identifier information comprises at least one of: a Subscription Permanent Identifier, SUPI, a Mobile Subscriber International ISDN/PSTN Number, MSISDN, a Generic Public Subscription Identifier, GPSI, or a near field communication identifier.

28. The method of any of claims 18 to 27, wherein the first data analysis identifier comprises part or all of data analysis identifiers capable of being provided by the terminal device.

29. The method of any of claims 18 to 28, wherein the sending a first request message comprises:
sending the first request message to the terminal device; or
sending the first request message to the terminal device by means of a data analysis and management function.

30. The method of any of claims 18 to 29, applied to a network device or other terminal device.

31. The method of claim 30, wherein the network device comprises at least one of: the data analysis and management function, Network Data Analytics Function, NWDAF, an Application Function, AF, a Policy Control Function, PCF, an Access and Mobility Management Function, AMF, a Session Management Function, SMF, or an access network device.

32. The method of any of claims 24 to 27, 29 and 31, wherein the data analysis and management function comprises at least one of: an NWDAF, an AF, a PCF, Unified Data Management, UDM, or a Network Repository Function, NRF.

33. The method of any of claims 18 to 32, wherein the first request message and the analysis result of the first data analysis are both carried in a user plane message, or the first request message and the analysis result of the first data analysis are both carried in a control plane message, or communication modes of the first request message and the analysis result of the first data analysis are both near field communication modes.

34. The method of any of claims 18 to 33, further comprising:
receiving a broadcast message sent by the terminal device, wherein the broadcast message comprises the first data analysis identifier.

35. A wireless communication method, comprising:
determining a first data analysis identifier and information of a terminal device; and
sending a response message to a request device, or sending a first request message to the terminal device based on the information of the terminal device, wherein the response message comprises the first data analysis identifier or the information of the terminal device, and the first request message is used for requesting, from the terminal device, a first data analysis corresponding to the first data analysis identifier.

36. The method of claim 35, wherein the first data analysis is a statistical or predictable analysis that is supported by the terminal device.

37. The method of claim 35 or 36, wherein the first data analysis comprises at least one of: mobility analysis of the terminal device, communication characteristics analysis of the terminal device, performance analysis of the terminal device, service experience analysis of a target service on the terminal device or wireless quality analysis.

38. The method of claim 37, wherein the mobility analysis comprises analysis of a position of the terminal device and/or analysis of a path of the terminal device.

39. The method of claim 37, wherein the communication characteristics analysis comprises analysis of at least one of the following information of the terminal device: a communication cycle, communication time, a domain name used for communication, a slice used for communication, a port number used for communication, or data amount.

40. The method of any of claims 35 to 39, further comprising:
receiving a registration information sent by the terminal device, wherein the registration information comprises the first data analysis identifier.

41. The method of claim 40, wherein the registration information further comprises information of the terminal device.

42. The method of claim 41, wherein the information of the terminal device comprises routing information and/or identifier information.

43. The method of claim 42, wherein the routing information comprises an Internet Protocol, IP, address and/or a Fully Qualified Domain Name, FQDN.

44. The method of claim 42, wherein the identifier information comprises at least one of: a Subscription Permanent Identifier, SUPI, a Mobile Subscriber International ISDN/PSTN Number, MSISDN, a Generic Public Subscription Identifier, GPSI, or a near field communication identifier.

45. The method of any of claims 35 to 44, wherein the first data analysis identifier comprises part or all of data analysis identifiers capable of being provided by the terminal device.

46. The method of any of claims 35 to 45, further comprising:
receiving an analysis result of the first data analysis sent by the terminal device; and
forwarding the analysis result of the first data analysis to the request device.

47. The method of claim 46, further comprising:
receiving a second request message sent by the request device; and
determining the first request message based on the second request message.

48. The method of claim 47, wherein the second request message comprises at least one data analysis identifier and information used for determining the terminal device; and the first data analysis identifier comprises a data analysis identifier capable of being provided by the terminal device among the at least one data analysis identifier.

49. The method of claim 47, wherein the second request message comprises at least one data analysis identifier; and the terminal device is a terminal device corresponding to the at least one data analysis identifier.

50. The method of claim 47, wherein the second request message comprises information used for determining the terminal device; and the first data analysis identifier comprises a data analysis identifier capable of being provided by the terminal device.

51. The method of any of claims 35 to 45, further comprising:
receiving a query message sent by the request device, wherein the query message is used for querying the first data analysis identifier and/or the information of the terminal device.

52. The method of claim 51, wherein the query message comprises at least one data analysis identifier and information used for determining the terminal device; and the first data analysis identifier comprises a data analysis identifier capable of being provided by the terminal device among the at least one data analysis identifier.

53. The method of claim 51, wherein the query message comprises at least one data analysis identifier; and the terminal device is a terminal device corresponding to the at least one data analysis identifier.

54. The method of claim 51, wherein the query message comprises information used for determining the terminal device; and the first data analysis identifier comprises a data analysis identifier capable of being provided by the terminal device.

55. The method of any of claims 35 to 54, wherein the request device is a network device or other terminal device.

56. The method of claim 55, wherein the network device comprises at least one of: the data analysis and management function, Network Data Analytics Function, NWDAF, an Application Function, AF, a Policy Control Function, PCF, an Access and Mobility Management Function, AMF, a Session Management Function, SMF, or an access network device.

57. The method of any of claims 35 to 54, applied to a data analysis and management function.

58. The method of claim 56 or 57, wherein the data analysis and management function comprises at least one of: an NWDAF, an AF, a PCF, Unified Data Management, UDM, or a Network Repository Function, NRF.

59. The method of any of claims 35 to 58, wherein the first request message and the analysis result of the first data analysis are both carried in a user plane message, or the first request message and the analysis result of the first data analysis are both carried in a control plane message, or communication modes of the first request message and the analysis result of the first data analysis are both near field communication modes.

60. A terminal device, comprising a communication unit, wherein the communication unit is configured to:
receive a first request message, wherein the first request message is used for requesting, from a terminal device, a first data analysis corresponding to a first data analysis identifier; and
send an analysis result of the first data analysis.

61. A request device, comprising a communication unit, wherein the communication unit is configured to:
send a first request message, wherein the first request message is used for requesting, from a terminal device, a first data analysis corresponding to a first data analysis identifier; and
receive an analysis result of the first data analysis.

62. A management device, comprising:
a processing unit, configured to determine a first data analysis identifier and information of a terminal device; and
a communication unit, configured to send a response message to a request device, or send a first request message to the terminal device based on the information of the terminal device, wherein the response message comprises the first data analysis identifier or the information of the terminal device, and the first request message is used for requesting, from the terminal device, a first data analysis corresponding to the first data analysis identifier.

63. A terminal device, comprising:
a processor, a memory and a transceiver, wherein the memory is configured to store a computer program; and the processor is configured to call and run the computer program stored in the memory, so as to execute the method of any of claims 1 to 17.

64. A request device, comprising:
a processor, a memory and a transceiver, wherein the memory is configured to store a computer program; and the processor is configured to call and run the computer program stored in the memory, so as to execute the method of any of claims 18 to 34.

65. A management device, comprising:
a processor, a memory and a transceiver, wherein the memory is configured to store a computer program; and the processor is configured to call and run the computer program stored in the memory, so as to execute the method of any of claims 35 to 59.

66. A chip, comprising:
a processor, configured to call and run a computer program from a memory, to cause a device having the chip mounted to execute the method of any of claims 1 to 17, or the method of any of claims 18 to 34, or the method of any of claims 35 to 59.

67. A computer-readable storage medium, configured to store a computer program, wherein the computer program causes a computer to execute the method of any of claims 1 to 17, or the method of any of claims 18 to 34, or the method of any of claims 35 to 59.

68. A computer program product, comprising a computer program instruction, wherein the computer program instruction causes a computer to execute the method of any of claims 1 to 17, or the method of any of claims 18 to 34, or the method of any of claims 35 to 59.

69. A computer program, wherein the computer program causes a computer to execute the method of any of claims 1 to 17, or the method of any of claims 18 to 34, or the method of any of claims 35 to 59.
